# FASCICULE DE BREVET EUROPEEN

(11) **EP 3 592 631 B1**
(45) Date de publication et mention de la délivrance du brevet: **03.03.2021**
(21) Numéro de dépôt: 18701765.2
(22) Date de dépôt: 30.01.2018
(51) Int. Cl.: B62D 25/08, B60R 5/02

(54) **AGENCEMENT DE MAINTIEN D'UN BAC DE COFFRE A L'AVANT D'UNE STRUCTURE DE CAISE D'UN VEHICULE AUTOMOBILE**
ANORDNUNG ZUM HALTEN EINES GEPÄCKRAUMBEHÄLTERS AN DER VORDERSEITE EINER KRAFTFAHRZEUGKAROSSERIESTRUKTUR
ARRANGEMENT FOR HOLDING A LUGGAGE COMPARTMENT BIN AT THE FRONT OF A MOTOR VEHICLE BODY STRUCTURE

(43) Date de publication de la demande: 15.01.2020
(73) Titulaire: Renault S.A.S., 92100 Boulogne-Billancourt (FR)
(72) Inventeur: NGUYEN, Luan, 91120 Palaiseau (FR); ESTIOT, Christophe, 28100 Dreux (FR); LANCELOT, David, 45310 Gemigny (FR)
(86) Numéro de dépôt international: PCT/EP2018/052299
(87) Numéro de publication internationale: WO 2018/162146

(56) Documents cités:
- DE-A1- 10 309 958
- US-A1- 2015 035 318
- US-B1- 9 440 527

## Description

La présente invention se rapporte à un agencement de maintien d'un bac de coffre sur une structure de caisse de véhicule automobile, le bac de coffre étant monté sur une partie avant de la structure de caisse du véhicule située entre une partie d'habitacle du véhicule automobile et une extrémité avant du véhicule sous un ouvrant du type capot de fermeture.

Il est connu des véhicules automobiles dans lesquels le compartiment moteur est situé à l'arrière du véhicule, tandis qu'un coffre est aménagé à l'avant, constitué d'un bac de coffre, généralement en matière plastique, rapporté sur la partie de la structure de caisse située entre la partie d'habitacle du véhicule automobile et l'extrémité avant du véhicule, sous un ouvrant de type capot de fermeture du coffre, dit capot avant, apte à s'ouvrir et à se fermer au moyen d'une rotation autour d'un axe transversal placé à l'arrière dudit capot avant.

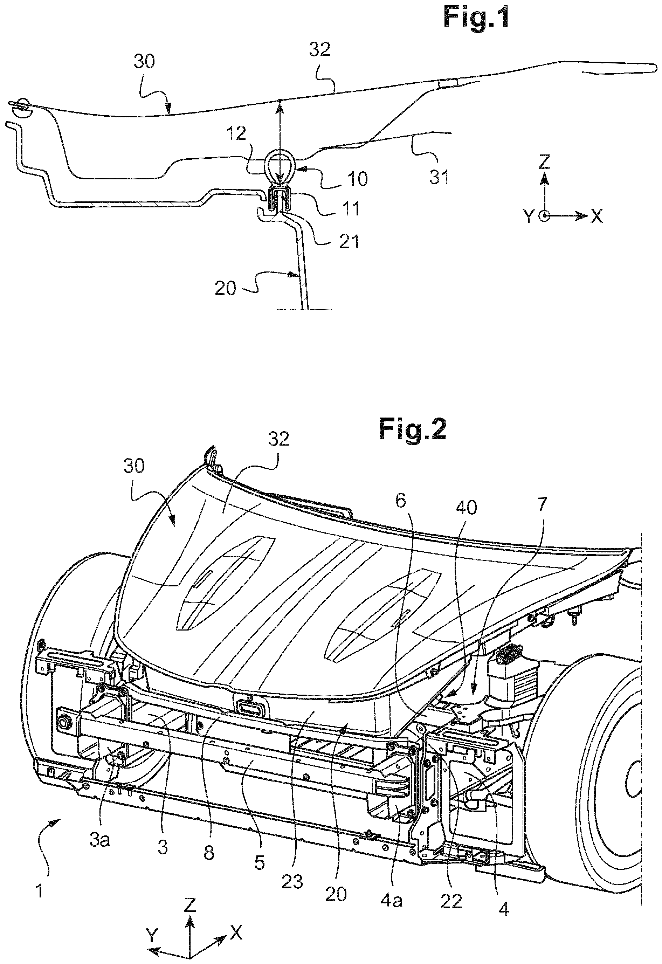

Le coffre devant bien entendu être étanche, une solution d'étanchéité décrite en référence à la figure 1 fait connaître un profilé d'étanchéité 10 adapté à être fixé sur une feuillure supérieure 21 du bac de coffre 20, qui s'étend de façon circonférentielle sous une doublure 31 du capot avant 30 formant renfort, située en regard d'une peau 32 formant le côté visible du capot avant 30. Le profilé d'étanchéité 10 comporte une zone de tenue 11, telle qu'une pince de section en U, reçue sur la feuillure supérieure 21 du bac de coffre 20, et une partie adjacente 12 souple et déformable, permettant d'assurer en tous points l'étanchéité entre la doublure 31 de capot avant et le bac de coffre 20. Ce profilé 10 forme ainsi un joint de coffre qui vient être comprimé entre la feuillure supérieure 21 du bac de coffre 20 et la doublure 31 du capot avant 30, en position de fermeture de ce dernier.

Cependant, la zone de compression du profilé d'étanchéité 10 au niveau de la feuillure supérieure 21 du bac de coffre 20 crée un point dur, qui entraîne une dégradation des performances choc tête-piéton, dans la mesure où la course de déformation du capot avant lors du choc tête est alors restreinte, ce qui engendre une inadaptation du véhicule par rapport à la réglementation liée à la protection des piétons en cas de choc frontal contre un véhicule. Cette réglementation contient en effet notamment un test dit « choc tête », réalisé à environ 40km/h, vitesse à laquelle on projette un impacteur représentant une tête d'un piéton en une zone définie du capot avant. On mesure alors la décélération subie par l'impacteur lors du choc avec le véhicule et on en déduit un critère HIC (Head Injury Criteria) qui ne doit pas dépasser certaines valeurs prédéfinies. La décélération renvoie directement à la violence du choc que l'on cherche à amoindrir grâce au caractère déformable des zones d'impact. Or, comme indiqué précédemment, en cas d'impact notamment de la tête d'un piéton avec la zone correspondante de la peau extérieure du capot avant, la présence du point dur créé par la compression du joint de coffre entre la feuillure supérieure du bac de coffre et la doublure de capot, empêche la descente du capot lors du choc tête.

Aussi, pour des véhicules dans lequel un bac de coffre prend place sous le capot avant du véhicule, par exemple pour certains véhicules commercialisés par le constructeur automobile Tesla ®, le bac de coffre est bi-matière avec en particulier la partie haute du bac de coffre qui est réalisée dans une matière plus souple que la matière utilisée pour le reste du bac de coffre, de manière à autoriser la descente du capot lors d'un choc tête. Cette solution et toutefois relativement coûteuse.

Le document DE 103 09 958 divulgue un agencement de maintien d'un bac de coffre sur une structure de caisse de véhicule automobile, selon le préambule de la revendication 1.

La présente invention a donc pour but de proposer agencement de maintien d'un bac de coffre sur une caisse de véhicule automobile sous le capot avant du véhicule, qui permet de faciliter la déformation du capot avant en cas de choc piéton afin de garantir une performance choc tête-piéton satisfaisante, tout en assurant la bonne tenue du bac de coffre lors d'un roulage avec bagages. De plus, l'agencement proposé doit être simple de conception et de réalisation, léger et peu onéreux.

A cet effet, l'invention a pour objet un agencement de maintien d'un bac de coffre sur une structure de caisse de véhicule automobile, le bac de coffre étant monté sur une partie avant de la structure de caisse du véhicule située entre une partie d'habitacle du véhicule automobile et une extrémité avant du véhicule, sous un ouvrant du type capot constitué d'une peau formant un côté visible et d'une doublure formant un renfort, ledit bac de coffre comprenant une feuillure supérieure s'étendant de façon circonférentielle sous ladite doublure dudit capot et sur laquelle est adapté à être fixé un profilé d'étanchéité apte à être comprimé entre ladite feuillure supérieure dudit bac de coffre et ladite doublure dudit capot, en une position de fermeture dudit capot, caractérisé en ce que ledit bac de coffre présente une paroi inférieure située à l'opposé dudit capot par rapport à ladite feuillure supérieure, ladite paroi inférieure étant montée en partie arrière sur une traverse s'étendant suivant un axe transversal du véhicule entre deux longerons avant délimitant latéralement ladite partie avant de ladite structure de caisse, par l'intermédiaire d'au moins deux zone de liaison, chaque zone de liaison comprenant un pontet présentant une section en forme d'arche, adapté pour être fixé entre une paroi supérieure de ladite traverse et ladite paroi inférieure dudit bac de coffre, ledit pontet étant dimensionné pour lui permettre de s'écraser sur lui-même en cas d'impact sur ledit capot notamment de la tête d'un piéton, de façon à constituer une zone de liaison déformable permettant un enfoncement dudit bac de coffre suivant l'axe vertical du véhicule lors dudit impact.

De préférence, ledit pontet comporte une région centrale adaptée pour être fixée à ladite paroi inférieure dudit bac de coffre et deux branches latérales de part et d'autre de ladite région centrale, adaptées pour être fixées sur ladite paroi supérieure de ladite traverse, lesdites deux branches latérales comprenant des parties de profil en S, symétriques entre elles.

Avantageusement, chaque partie de profil en S desdites régions latérales dudit pontet est ajourée par des lumières.

De préférence, ledit pontet est constitué d'une tôle aluminium emboutie.

Avantageusement, l'épaisseur de ladite tôle est comprise entre 0,8 mm et 2,5 mm, et de préférence entre 1 et 2 mm.

Selon un mode de réalisation, ladite paroi inférieure dudit bac de coffre est assemblé par rivetage audit pontet.

Selon un mode de réalisation, ledit pontet est assemblé par vissage ou rivetage sur ladite paroi supérieure de ladite traverse.

De préférence, trois zones de liaison déformables sont réparties le long de ladite traverse entre ladite paroi supérieure de ladite traverse et ladite paroi inférieure dudit bac de coffre.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1, déjà décrite, est un schéma illustrant une vue partielle en coupe longitudinale, de la partie avant de la partie avant de la structure de caisse d'un véhicule automobile du type comportant un bac de coffre agencé dans cette partie avant ;
- la figure 2 est un schéma illustrant une vue en perspective de l'agencement du bac de coffre en partie avant de la structure de caisse du véhicule ;
- la figure 3 est un schéma illustrant une vue de détail de l'assemblage du bac de coffre sur une traverse s'étendant transversalement en partie avant de la structure de caisse, entre deux longerons avant en position sensiblement médiane de ceux-ci ;
- la figure 4 est un schéma illustrant une vue de détail en perspective d'un pontet constituant une zone de liaison déformable entre le bac de coffre et une traverse située en arrière de la partie avant de la structure de caisse du véhicule.

Les éléments communs à l'ensemble des figures portent les mêmes références.

Les expressions telles que «arrière» et «avant», «gauche» et «droite», «supérieur » et «inférieur» et les orientations «longitudinale», «transversale» et «verticale» seront définies en référence au repère X, Y, Z représenté sur les figures, où les axes X, Y, Z, correspondent respectivement à l'axe longitudinal (orienté d'avant en arrière), transversal (orienté vers la droite) et vertical (orienté vers le haut) du véhicule.

En référence à la figure 2, la partie avant de la structure de caisse, ou unité avant 1, est disposée en avant d'une partie d'habitacle du véhicule automobile. La structure de caisse est ici préférentiellement réalisée en aluminium et assemblée par collage et rivetage. Le véhicule est du type dans lequel le compartiment moteur est situé à l'arrière du véhicule, tandis que l'unité avant 1 de la structure de caisse est prévue pour intégrer un réservoir de carburant du véhicule, en vue d'une meilleure répartition de masse entre les trains avant et arrière du véhicule, ainsi qu'un coffre aménagé à l'avant, constitué du bac de coffre 20, typiquement en plastique rigide, partageant l'espace sous le capot avant 30 avec le réservoir de carburant. Le terme « bac de coffre » s'entend de façon large comme un bac situé dans la zone sous capot. Cette expression désigne par exemple un bac de rangement destiné à recevoir tout type d'élément ou accessoire, ou même comme un boitier recevant un équipement quelconque du véhicule. Le bac peut être ouvert ou fermé en partie supérieure, hormis l'élément de fermeture que constitue le capot.

L'unité avant 1 comprend deux longerons parallèles, respectivement un longeron avant droit 3 et un longeron avant gauche 4, qui s'étendent selon l'axe longitudinal X du véhicule à partir de la partie d'habitacle vers des extrémités avant respectives des longerons 3a et 4a, reliées entre elles par une première traverse d'extrémité avant 5 disposée au niveau du plan supérieur des longerons 3 et 4.

Les longerons avant droit 3 et gauche 4 sont également reliés entre eux par l'intermédiaire d'une deuxième traverse d'extrémité avant 6, située en arrière de la première traverse d'extrémité avant 5 sous le capot avant du véhicule. La deuxième traverse d'extrémité avant 6 est donc disposée entre la partie d'habitacle (en avant de celle-ci) et la première traverse d'extrémité avant 5, en position sensiblement médiane des longerons 3 et 4, de façon à délimiter, au niveau d'une partie arrière des longerons 3 et 4, qui s'entend de la partie des longerons qui s'étend entre la partie d'habitacle du véhicule et cette deuxième traverse d'extrémité avant 6, un compartiment 7 dans lequel est prévu pour venir se loger le réservoir de carburant du véhicule. Autrement dit, la deuxième traverse d'extrémité avant 6 et les parties arrière respectives des longerons avant droit et gauche 3, 4 constituent un cadre servant de bordure au réservoir de carburant.

Une traverse intermédiaire 8 reliant les deux longerons avant droit 3 et gauche 4, est également disposée entre les deux traverses d'extrémité avant 5 et 6, immédiatement en arrière de la première traverse d'extrémité avant 5, et constitue la traverse de bac de coffre.

Le bac de coffre 20 présente une paroi inférieure 22, ou paroi de fond, de forme préférentiellement sensiblement rectangulaire, des parois latérales 23 s'étendant sensiblement verticalement à partir de la paroi inférieure 22 et se terminant par la feuillure supérieure 21 du bac de coffre 20, qui s'étend de façon circonférentielle sous la doublure 31 du capot avant 30, comme illustré à la figure 1. La paroi inférieure 22 du bac de coffre s'étend entre la deuxième traverse d'extrémité avant 6, située en position sensiblement médiane des longerons avant 3 et 4, et la traverse de bac de coffre 8, de sorte que le bac de coffre 20 repose sur ces deux traverses par sa paroi inférieure 22. Plus précisément, la deuxième traverse d'extrémité avant 6 et la traverse de bac de coffre 8 s'étendent sous la paroi inférieure 22 du bac de coffre 20, respectivement en partie arrière et en partie avant de celle-ci.

La partie arrière de la paroi inférieure 22 du bac de coffre 20 s'étend sensiblement au droit de la zone du capot 30 susceptible d'être heurtée lors d'un « choc tête », au niveau de laquelle on cherche à diminuer le critère HIC.

Aussi, conformément à l'invention, on prévoit que la paroi inférieure 22 soit assemblée, au niveau de sa partie arrière, sur la deuxième traverse d'extrémité avant 6 située en dessous, par des zones de liaison 40 déformables, permettant un enfoncement du bac de coffre 20 selon l'axe Z du véhicule, en cas d'impact notamment de la tête d'un piéton avec la zone correspondante de la peau extérieure 32 du capot 30, tout en permettant également une tenue efficace lors d'un roulage du véhicule avec le coffre chargé.

Chaque zone de liaison 40 est constituée d'un pontet 41 présentant une section en forme d'arche, adapté pour être fixé entre la paroi supérieure 60 de la deuxième traverse d'extrémité avant 6 et la paroi inférieure 22 du bac de coffre. Chaque pontet 41 situé sous le bac de coffre 20, entre la paroi inférieure 22 de celui-ci et la paroi supérieure 60 de la deuxième traverse d'extrémité avant 6, est dimensionné pour lui permettre de s'écraser sur lui-même en cas d'impact sur la zone correspondante du capot notamment de la tête d'un piéton, de façon permettre l'enfoncement du bac de coffre 20 suivant l'axe vertical Z du véhicule.

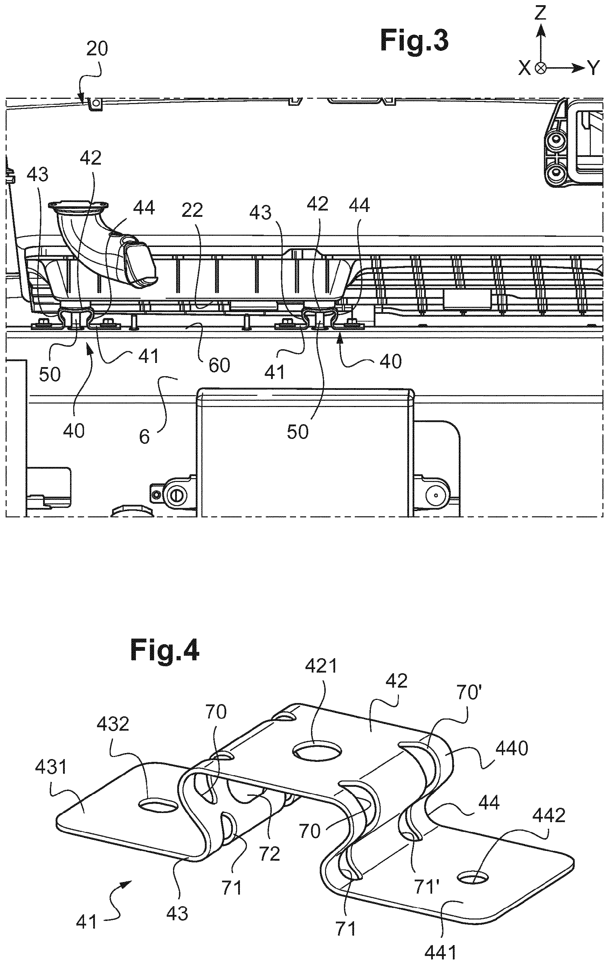

Plus précisément, en référence à la figure 4, chaque pontet 41 comporte une région centrale 42, sensiblement plane et deux branches latérales 43, 44, situées de part et d'autre de la région centrale 42, qui présentent des parties de profils en S, respectivement 430, 440, symétriques entre elles. La partie de profil en S 430, 440 de chaque branche latérale 43, 44 se termine, à l'opposé de la région centrale 42, par des ailes de fixation, respectivement 431, 441, qui sont adaptées pour être fixées sur la paroi supérieure 60 de la deuxième traverse d'extrémité avant 6 au moyen de trous de fixation, respectivement 432, 442, destinés à recevoir des éléments de fixation permettant la fixation du pontet 41 à la traverse 6, par exemple par vissage ou rivetage, ces exemples étant donnés à titre nullement limitatif.

La région centrale 42 du pontet 41, qui s'étend à distance selon l'axe Z des ailes de fixations 431, 441 des branches latérales 43, 44, par exemple d'une valeur d'environ 20,5 mm, est quant à elle destinée à être fixée à la paroi inférieure 22 du bac de coffre 20, par exemple par rivetage, au moyen d'un trou de fixation 421 destiné à recevoir un rivet 50, dit « rivet pop », placé dans un alésage correspondant de la paroi inférieure 22 du bac de coffre 20 et dans un trou percé correspondant de la paroi supérieure 60 de la traverse 6, comme illustré à la figure 3.

Le pontet 41 est préférentiellement formé d'une tôle aluminium emboutie, dont l'épaisseur est comprise entre 0,8 mm et 2,5 mm et de préférence entre 1 et 2 mm.

En cas d'impact notamment de la tête d'un piéton avec la zone correspondante de la peau extérieure 32 du capot 30, la partie de profil en S des deux branches latérales 43, 44 du pontet 41 est adaptée pour permettre, sous l'effet de la sollicitation transmise au pontet 41 via le bac de coffre 20, une déformation du pontet 41 par écrasement sur lui-même et ainsi permettre un enfoncement du bac de coffre selon l'axe vertical Z du véhicule d'une certaine valeur, correspondant sensiblement à la hauteur du pontet.

De la sorte, une partie de l'énergie de choc peut être absorbée grâce à la déformation des pontets 41 permettant la descente en Z du bac de coffre 20, ce qui fait que la décélération de la tête lors de l'impact sur la zone correspondante du capot 30 sera moins importante.

La partie de profil en S, respectivement 430, 440 des régions latérales 43 et 44 du pontet 41, est en outre ajourée par des lumières réparties sur la surface de la partie de profil en S, de telle sorte à permettre de faciliter la déformation du pontet 41 lors d'un choc tête, tout en permettant de conserver une rigidité suffisante pour la robustesse de la tenue lors d'un roulage avec coffre chargé. Chaque partie de profil en S comprend, par exemple, deux séries de deux lumières oblongues, respectivement 70 et 71 et 70' et 71', alignées selon leur direction longitudinale sur sensiblement toute la hauteur de la partie de profil en S et disposées sur des côtés respectifs de la partie de profil en S, et entre lesquelles s'étend, dans une zone sensiblement médiane de la partie de profil en S, une lumière oblongue 72 orientée transversalement aux deux séries de lumières précitées, selon sa direction longitudinale.

De préférence, les pontets 41 sont au nombre de trois, répartis le long de la paroi supérieure 60 de la deuxième traverse d'extrémité avant 6, l'un étant positionné sensiblement au milieu de la traverse 6 et les deux autres étant positionnés de part et d'autre au niveau de chacune des deux extrémités respectives de la traverse 6.

Dans une variante de réalisation non représentée de l'invention, le bac de coffre peut être relié à la structure du véhicule non pas par l'intermédiaire de traverses, mais par l'intermédiaire de tout élément de structure de forme différente constituant un support sous le bac de coffre, et fixé au soubassement du véhicule.

## Revendications

1. Agencement de maintien d'un bac de coffre (20) sur une structure de caisse de véhicule automobile, le bac de coffre (20) étant monté sur une partie avant (1) de la structure de caisse du véhicule située entre une partie d'habitacle du véhicule automobile et une extrémité avant du véhicule, sous un ouvrant du type capot (30) constitué d'une peau (32) formant un côté visible et d'une doublure (31) formant un renfort, ledit bac de coffre (20) comprenant une feuillure supérieure (21) s'étendant de façon circonférentielle sous ladite doublure (31) dudit capot (30) et sur laquelle est adapté à être fixé un profilé d'étanchéité (10) apte à être comprimé entre ladite feuillure supérieure (21) dudit bac de coffre (20)et ladite doublure dudit capot (30), en une position de fermeture dudit capot, **caractérisé en ce que** ledit bac de coffre (20) présente une paroi inférieure (22) située à l'opposé dudit capot (30) par rapport à ladite feuillure supérieure (21), ladite paroi inférieure (22) étant montée en partie arrière sur une traverse (6) s'étendant suivant un axe transversal (Y) du véhicule entre deux longerons avant (3, 4) délimitant latéralement ladite partie avant (1) de ladite structure de caisse, par l'intermédiaire d'au moins deux zone de liaison (40), chaque zone de liaison (40) comprenant un pontet (41) présentant une section en forme d'arche, adapté pour être fixé entre une paroi supérieure (60) de ladite traverse (6) et ladite paroi inférieure (22) dudit bac de coffre, ledit pontet (41) étant dimensionné pour lui permettre de s'écraser sur lui-même en cas d'impact sur ledit capot (30) notamment de la tête d'un piéton, de façon à constituer une zone de liaison déformable permettant un enfoncement dudit bac de coffre (20) suivant l'axe vertical (Z) du véhicule lors dudit impact.

2. Agencement selon la revendication 1, **caractérisé en ce que** ledit pontet (41) comporte une région centrale (42) adaptée pour être fixée à ladite paroi inférieure (22) dudit bac de coffre et deux branches latérales (43, 44) de part et d'autre de ladite région centrale (42), adaptées pour être fixées sur ladite paroi supérieure (60) de ladite traverse (6), lesdites deux branches latérales (43, 44) comprenant des parties de profil en S (430, 440), symétriques entre elles.

3. Agencement selon la revendication 2, **caractérisé en ce que** chaque partie de profil en S (430, 440) desdites régions latérales (43, 44) dudit pontet (41) est ajourée par des lumières.

4. Agencement selon l'une quelconque des revendications 1 à 3, **caractérisé en ce que** ledit pontet (41) est constitué d'une tôle aluminium emboutie.

5. Agencement selon la revendication 4, **caractérisé en ce que** l'épaisseur de ladite tôle est comprise entre 0,8 mm et 2,5 mm, de préférence entre 1 et 2 mm.

6. Agencement selon l'une quelconque des revendications précédentes, **caractérisé en ce que** ladite paroi inférieure (22) dudit bac de coffre est assemblé par rivetage audit pontet (41).

7. Agencement selon l'une quelconque des revendications précédentes, **caractérisé en ce que** ledit pontet (41) est assemblé par vissage ou rivetage sur ladite paroi supérieure (60) de ladite traverse (6).

8. Agencement selon l'une quelconque des revendications précédentes, **caractérisé en ce qu'**il comprend trois zones de liaison (40) déformables réparties le long de ladite traverse (6) entre ladite paroi supérieure (60) de ladite traverse (6) et ladite paroi inférieure (22) dudit bac de coffre (20).

## Patentansprüche

1. Anordnung zum Halten eines Gepäckraumbehälters (20) an einer Kraftfahrzeugkarosseriestruktur, wobei der Gepäckraumbehälter (20) an einem vorderen Teil (1) der Karosseriestruktur des Fahrzeugs angebracht ist, der sich zwischen einem Innenraumteil des Kraftfahrzeugs und einem vorderen Ende des Fahrzeugs befindet, unter einem Öffnungselement vom Typ einer Haube (30), die aus einer Haut (32), die eine sichtbare Seite bildet, und einer Verkleidung (31), die eine Verstärkung bildet, besteht, wobei der Gepäckraumbehälter (20) einen oberen Falz (21) umfasst, der sich in Umfangsrichtung unter der Verkleidung (31) der Haube (30) erstreckt und an dem ein Dichtprofil (10) befestigt werden kann, das zwischen dem oberen Falz (21) des Gepäckraumbehälter (20) und der Verkleidung der Haube (30) in einer Schließposition der Haube zusammendrückbar ist, **dadurch gekennzeichnet, dass** der Gepäckraumbehälter (20) eine untere Wand (22) aufweist, die sich in Bezug auf den oberen Falz (21) gegenüber der Haube (30) befindet, wobei die untere Wand (22) im hinteren Teil über mindestens zwei Verbindungsbereiche (40) an einem Querträger (6) angebracht ist, der sich entlang einer Querachse (Y) des Fahrzeugs zwischen zwei vorderen Längsträgern (3, 4) erstreckt, die den vorderen Teil (1) der Karosseriestruktur seitlich begrenzen, wobei jeder Verbindungsbereich (40) einen Bügel (41) umfasst, der einen bogenförmigen Querschnitt aufweist und dafür ausgelegt ist, zwischen einer oberen Wand (60) des Querträgers (6) und der unteren Wand (22) des Gepäckraumbehälters befestigt zu werden, wobei der Bügel (41) so bemessen ist, dass er im Falle eines Aufpralls, insbesondere des Kopfes eines Fußgängers, auf die Haube (30) zusammengequetscht werden kann, um so einen verformbaren Verbindungsbereich zu bilden, der ein Eindrücken des Gepäckraumbehälters (20) entlang einer vertikalen Achse (Z) des Fahrzeugs bei dem Aufprall ermöglicht.

2. Anordnung nach Anspruch 1, **dadurch gekennzeichnet, dass** der Bügel (41) einen mittleren Bereich (42), der dafür ausgelegt ist, an der unteren Wand (22) des Gepäckraumbehälters befestigt zu werden, und zwei seitliche Arme (43, 44) beiderseits des mittleren Bereichs (42), die dafür ausgelegt sind, an der oberen Wand (60) des Querträgers (6) befestigt zu werden, aufweist, wobei die zwei seitlichen Arme (43, 44) S-förmige Profilteile (430, 440) umfassen, die zueinander symmetrisch sind.

3. Anordnung nach Anspruch 2, **dadurch gekennzeichnet, dass** jeder S-förmige Profilteil (430, 440) der seitlichen Bereiche (43, 44) des Bügels (41) von Löchern durchbrochen ist.

4. Anordnung nach einem der Ansprüche 1 bis 3, **dadurch gekennzeichnet, dass** der Bügel (41) aus einem tiefgezogenen Aluminiumblech besteht.

5. Anordnung nach Anspruch 4, **dadurch gekennzeichnet, dass** die Dicke des Bleches zwischen 0,8 mm und 2,5 mm, vorzugsweise zwischen 1 und 2 mm liegt.

6. Anordnung nach einem der vorhergehenden Ansprüche, **dadurch gekennzeichnet, dass** die untere Wand (22) des Gepäckraumbehälters durch Vernietung mit dem Bügel (41) zusammengebaut ist.

7. Anordnung nach einem der vorhergehenden Ansprüche, **dadurch gekennzeichnet, dass** der Bügel (41) durch Verschraubung oder Vernietung auf der oberen Wand (60) des Querträgers (6) montiert ist.

8. Anordnung nach einem der vorhergehenden Ansprüche, **dadurch gekennzeichnet, dass** sie drei entlang des Querträgers (6) verteilte verformbare Verbindungsbereiche (40) zwischen oberen Wand (60) des Querträgers (6) und der unteren Wand (22) des Gepäckraumbehälters (20) umfasst.

## Claims

1. Arrangement for holding a luggage compartment bin (20) on a motor vehicle body structure, the luggage compartment bin (20) being mounted on a front part (1) of the vehicle body structure located between a passenger compartment part of the motor vehicle and a front end of the vehicle, under an opening portion of the bonnet type (30) consisting of a skin (32) forming a visible side and a lining (31) forming a reinforcement, said luggage compartment bin (20) comprising an upper rabbet (21) which extends circumferentially beneath said lining (31) of said bonnet (30) and on which there is designed to be secured a sealing profile (10) that is designed to be compressed between said upper rabbet (21) of said luggage compartment bin (20) and said lining of said bonnet (30), in a closed position of said bonnet, **characterized in that** said luggage compartment bin (20) has a lower wall (22) located opposite said bonnet (30) with respect to said upper rabbet (21), said lower wall (22) being mounted in the rear part on a crossmember (6) extending along a transverse axis (Y) of the vehicle between two front stringers (3, 4) laterally delimiting said front part (1) of said body structure, via the intermediary of at least two connection zones (40), each connection zone (40) comprising a bridge (41) that has an arch-shaped section, designed to be secured between an upper wall (60) of said crossmember (6) and said lower wall (22) of said luggage compartment bin, said bridge (41) being dimensioned in such a way that it can collapse on itself in the event of an impact on said bonnet (30), in particular from the head of a pedestrian, so as to constitute a deformable connection zone that allows said luggage compartment bin (20) to be depressed along the vertical axis (Z) of the vehicle in the event of said impact.

2. Arrangement according to Claim 1, **characterized in that** said bridge (41) comprises a central region (42) that is designed to be secured to said lower wall (22) of said luggage compartment bin and two lateral branches (43, 44) on either side of said central region (42), these being designed to be secured to said upper wall (60) of said crossmember (6), said two lateral branches (43, 44) comprising mutually symmetric S-profile parts (430, 440).

3. Arrangement according to Claim 2, **characterized in that** each S-profile part (430, 440) of said lateral regions (43, 44) of said bridge (41) has openings pierced in it.

4. Arrangement according to any one of Claims 1 to 3, **characterized in that** said bridge (41) consists of a stamped aluminium sheet.

5. Arrangement according to Claim 4, **characterized in that** the thickness of said sheet is between 0.8 mm and 2.5 mm, preferably between 1 and 2 mm.

6. Arrangement according to any one of the preceding claims, **characterized in that** said lower wall (22) of said luggage compartment bin is assembled by riveting to said bridge (41).

7. Arrangement according to any one of the preceding claims, **characterized in that** said bridge (41) is assembled by screwing or riveting to said upper wall (60) of said crossmember (6).

8. Arrangement according to any one of the preceding claims, **characterized in that** it comprises three deformable connection zones (40) distributed along said crossmember (6) between said upper wall (60) of said crossmember (6) and said lower wall (22) of said luggage compartment bin (20).
